# EUROPÄISCHE PATENTSCHRIFT

(11) **EP 0 586 847 B1**
(45) Veröffentlichungstag und Bekanntmachung des Hinweises auf die Patenterteilung: **07.07.1999**
(21) Anmeldenummer: 93111768.3
(22) Anmeldetag: 22.07.1993
(51) Int. Cl.: G06F 9/46

(54) **Verfahren zur Unterbrechungssteuerung von Prozessen in Kommunikationssystemen**
Method for interrupt control of processes in communication systems
Procédé pour la commande d'interruption de processus dans des systèmes de communication

(30) Priorität: 10.08.1992 DE 4226455
(43) Veröffentlichungstag der Anmeldung: 16.03.1994
(73) Patentinhaber: SIEMENS AKTIENGESELLSCHAFT, 80333 München (DE)
(72) Erfinder: Leimkötter, Ulrich, Dipl.-Ing., D-45888 Gelsenkirchen (DE); Heising, Andreas, Dipl.-Ing., D-58239 Schwerte (DE)

(56) Entgegenhaltungen:
- DE-A- 2 443 081
- DE-A- 3 138 963

## Beschreibung

Die Erfindung betrifft ein Verfahren gemäß Oberbegriff des Patentanspruchs 1.

Die Anforderungen, die an zeitgemäße Kommunikationssysteme gestellt werden, betreffen insbesondere systeminterne, zeitkritische Abläufe, da es hier sehr schnell zu Einschränkungen der Verfügbarkeit kommt. Aus diesem Grunde müssen die in Kommunikationssystemen ablaufenden Aufgabenkomplexe in ihrer Bearbeitung entsprechend organisiert werden. So werden Aufgabenkomplexe oder Systemaufgaben in Teilaufgaben zerlegt, die von Prozessen bearbeitet werden; anschließend werden die Teilergebnisse wieder zu einem Gesamtergebnis zusammengesetzt. Da in einem Kommunikationssystem demzufolge eine entsprechende Vielzahl von Prozessen abläuft, muß eine übergeordnete Organisationsform dafür Sorge tragen, daß das Ablaufen der einzelnen Prozesse koordiniert wird.

Eine dieser Organisationsformen wird durch eine sogenannte Unterbrechungssteuerung realisiert. Im "Duden Informatik", ein Sachlexikon für Studium und Praxis, Duden-Verlag Mannheim-Wien-Zürich, 1988, ISBN 3-411-02421-6, Seite 627, ist beschrieben, wie eine derartige Unterbrechungssteuerung abläuft. Generell wird von einer im Kommunikationssystem zur Bearbeitung anstehenden Systemaufgabe ein Unterbrechungssignal, im folgenden Interrupt genannt, abgesetzt. Dieser Interrupt teilt einem der jeweiligen Systemaufgabe zugeordneten Prozeß mit, daß die Abarbeitung der Systemaufgabe erwünscht ist. Dabei wird durch den Interrupt über eine ihm zugeordnete Interrupt-Serviceroutine eine Flagge in einem Wartepunkt einer Interrupt-Steuerungsroutine gesetzt, die für die Koordinierung der jeweiligen Interrupts verantwortlich ist und mehrere dieser Wartepunkte beinhaltet; dabei befindet sich auf jedem dieser Wartepunkte ein Prozeß in Wartestellung. Setzt die jeweilige Interrupt-Serviceroutine eine Flagge in diesem Wartepunkt, so wird der jeweilige Prozeß aktiviert und zum Ablauf gebracht. Während seines Ablaufs bearbeitet der Prozeß die ihm zugeordnete Systemaufgabe und wird nach Abarbeitung derselben wieder an dem Wartepunkt in Wartestellung versetzt. Diese Vorgehensweise bietet den Vorteil, daß die Interrupt-Bearbeitung als Prozeß in das System eingebunden ist. Allerdings entsteht dadurch gegenüber einer direkten Abarbeitung zusätzlicher Verwaltungsaufwand. Bei relativ seltenen Ereignissen fällt dieser zusätzliche Verwaltungsaufwand nicht ins Gewicht, er kann somit ohne Dynamikprobleme erledigt werden. Wird allerdings diese Art der Interrupt-Steuerung häufiger verwendet, kann dies im Extremfall zu einer Dynamikverminderung des gesamten Systems führen. In diesem Fall wäre das System nur noch mit der Abarbeitung der jeweiligen Systemaufgaben beschäftigt, und wäre dadurch für weitere Aufgaben blockiert.

Der Erfindung liegt die Aufgabe zugrunde, ein Verfahren anzugeben, bei dem auch bei häufiger Verwendung einer Interrupt-Steuerung die Dynamikverminderung vermieden wird.

Die Aufgabe wird ausgehend von der Unterbrechungssteuerung gemäß dem Oberbegriff des Patentanspruchs 1 durch dessen kennzeichnende Merkmale gelöst.

Wesentlich für die Erfindung ist ein Umschalten der unterbrechungsgesteuerten Betriebsart in eine zyklisch abfragegesteuerte Betriebsart. Dabei wird unmittelbar nach dem Start des die jeweilige Systemaufgabe bearbeitenden Prozesses der diesen Prozeß anfordernde Interrupt blockiert. Ist die Systemaufgabe bearbeitet, überprüft der jeweilige Prozeß, ob während des Bearbeitungsvorgangs weitere Interrupt-Anforderungen eingetroffen sind. Ist dies der Fall, wird der Prozeß erneut zur Bearbeitung der Systemaufgabe zum Ablauf gebracht. Dies bedeutet, daß der Prozeß den Wartepunkt überspringt und solange die Systemaufgabe bearbeitet, bis keine Interrupt-Anforderungen mehr vorliegen. Anschließend wird der Interrupt wieder freigegeben und der Prozeß kehrt zum Wartepunkt zurück.

Vorteilhaft an dem erfindungsgemäßen Verfahren ist, daß die Dynamik des Systems durch den Betriebsartenwechsel erheblich erhöht wird und im Extremfall eine Systemblockade verhindert werden kann.

Die in der vorliegenden Anmeldung angeschnittene Problematik, auch bei häufiger Verwendung einer Interrupt-Steuerung eine Dynamikverminderung zu vermeiden, war auch bei zentralgesteuerten Datenverarbeitungsanlagen zu lösen.

Aus der Druckschrift DE-A-2 443 081 ist ein Datenverarbeitungssystem mit prioritätsgesteuertem Zustandswechsel des Zentralprozessors bekannt.

Es sind mehrere den Zustand des Zentralprozessors festlegende Teilbetriebssysteme vorgesehen, welchen jeweils mindestens ein Anwenderprogramm zur Aktivierung untergeordnet ist.

Trifft während der Bearbeitung eines Interrupts, welcher einer bestimmten Prioritätsstufe zugeordnet ist, ein weiterer, für dieselbe Prioritätsstufe oder Prioritätsebene bestimmter Interrupt ein, so kann dieser durch das Betriebssystem nicht analysiert werden, eher der zuvor eingetroffene Interrupt bearbeitet wird.

Hierbei ist das Teilproblem zu lösen, daß das Betriebssystem jederzeit periphere Interrupts analysieren kann.

Durch Aufspalten jeder Prioritätsstufe gewissermaßen in zwei Niveaus, von denen das Teilbetriebssystem das höher priore und das ihm untergeordnete Anwenderprogramm das nieder priore System ist, gelingt es, die Reaktionsfreudigkeit des Zentralprozessors zu erhalten und Anwenderprogramme auf allen Prioritätsebenen durch das jeweilige Teilbetriebssystem zu kontrollieren.

Nach dem Absetzen eines ersten Interrupts durch die Peripherie, durch die Anwenderprogramme oder durch Programmlaufbesonderheiten der Anwenderprogramme wird ein Teilbetriebssystem aktiv und für weitere Interruptsanalyse bereit. Es braucht daher nicht erst abgewartet werden, bis der zuerst eingegangene Interrupt abgearbeitet ist.

Gemäß Anspruch 2 ist vorgesehen, daß der den Prozeß anfordernde Interrupt unmittelbar nach dem Start gesperrt wird. Damit ist der Vorteil verbunden, daß beispielsweise bei einer mehrfach, hintereinander anliegenden Bearbeitungsanforderung im Sinne eines Bearbeitungswunsches durch die gleiche Systemaufgabe der dieser zugeordnete Prozeß nicht immer nach Bearbeitung derselben zu seinem Wartepunkt zurückkehren muß. Damit wird insbesondere im Falle der Verwendung einer Vielzahl von Interrupts durch die jeweiligen Systemaufgabe eine Dynamikverminderung vermieden.

Gemäß Anspruch 3 ist vorgesehen, daß der der jeweiligen Systemaufgabe zugeordnete Prozeß erst dann in den zugeordneten Wartepunkt gesteuert wird, wenn keine Interrupt-Anforderungen mehr vorliegen. Mit dieser Vorgehensweise ist der Vorteil verbunden, daß nicht - wie beim Stand der Technik - beim Absetzen eines Interrupts die zugeordneten

Interrupt-Serviceroutinen aufgerufen und Flaggen in der Interrupt-Steuerungsroutine gesetzt werden müssen, was letztendlich eine Erhöhung der Dynamik des gesamten Systems bedeutet.

Gemäß Anspruch 4 ist vorgesehen, daß jedem Prozeß eine Prioritätsstufe zugeordnet wird. Dies hat den Vorteil, daß die zu bearbeitenden Systemaufgaben entsprechend ihrer Dringlichkeit bearbeitet werden können. Ein Prozeß, der einer Systemaufgabe mit hoher Dringlichkeit zugeordnet ist, kann aufgrund seiner ihm zugewiesenen hohen Prioritätsstufe einen Prozeß, der eine weniger dringliche Systemaufgabe bearbeitet und dem demzufolge eine geringere Prioritätsstufe zugeordnet ist, in seinem zeitlichen Ablauf unterbrechen.

Im folgenden wird die Erfindung anhand zweier Zeichnungen näher erläutert.

Es zeigen
- FIG 1: ein Blockdiagramm, in dem das Zusammenwirken der einzelnen Prozesse erläutert ist, und
- FIG 2: ein Flußdiagramm, das detailliert die Vorgehensweise des erfindungsgemäßen Verfahrens aufzeigt.

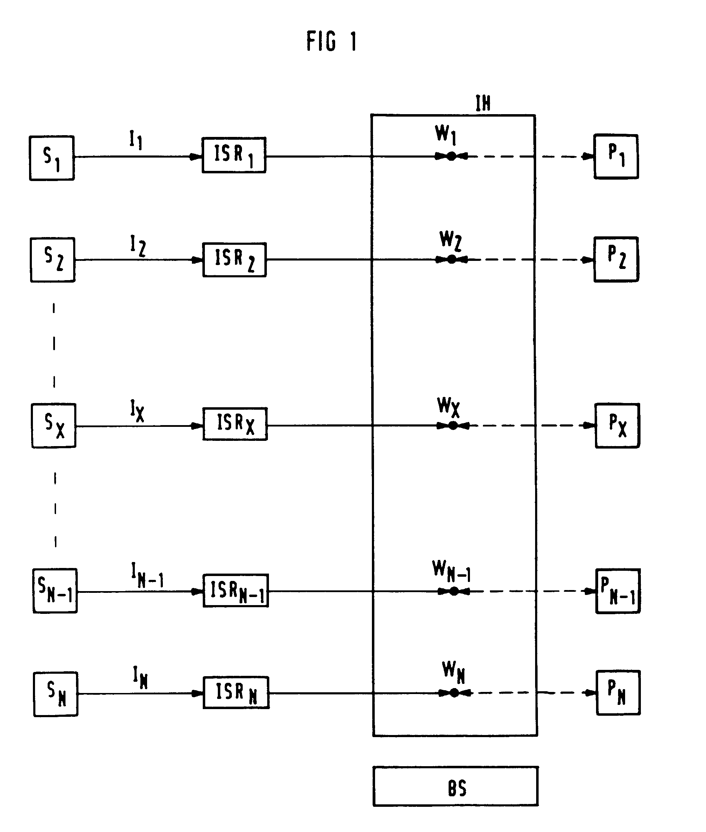

In FIG 1 sind die Systemaufgaben S1...Sn aufgezeigt. Von ihnen wird im Falle eines Bearbeitungswunsches ein Interrupt I1...In abgesetzt. Die dem jeweiligen Interrupt zugehörige Interrupt-Serviceroutine ISR1...ISRn setzt in der Interrupt-Steuerungsroutine IH in dem jeweiligen Wartepunkt W1...Wn eine Flagge. Im Wartepunkt sind die Prozesse P1...Pn in Wartestellung. Die Prozesse P1...Pn sind den jeweiligen Systemaufgaben S1...Sn zugeordnet und bearbeiten im Falle ihres Ablaufs die jeweilige Systemaufgabe.

Wird in einem Wartepunkt des Prozesses Px eine Flagge gesetzt - was letztendlich bedeutet, daß die Systemaufgabe Sx zur Bearbeitung ansteht - so wird durch das Setzen der Flagge der Prozeß Px aktiviert. Im folgenden wird vom Betriebssystem BS geprüft, ob der Prozeß Px aufgrund seiner ihm zugeordneten Prioritätsstufe bereits ablaufberechtigt ist und somit die Bearbeitung der Systemaufgabe Sx von diesem Prozeß Px durchgeführt werden kann. Laufen momentan Prozesse höherer Priorität ab, so wird der Prozeß Px durch das Betriebssystem BS in seinem Ablauf gehindert. Erst wenn alle höher prioren Prozesse abgelaufen sind, wird der Prozeß Px gestartet. Werden während des Ablaufs Prozesse höherer Priorität aktiviert, so wird der Prozeß Px vertagt, d. h. in seinem zeitlichen Ablauf verschoben. Erst wenn diese, den Prozeß Px unterbrechenden Prozesse in ihrem Ablauf beendet sind, kann der Prozeß Px die Bearbeitung der zugeordneten Systemaufgabe Sx wieder aufnehmen.

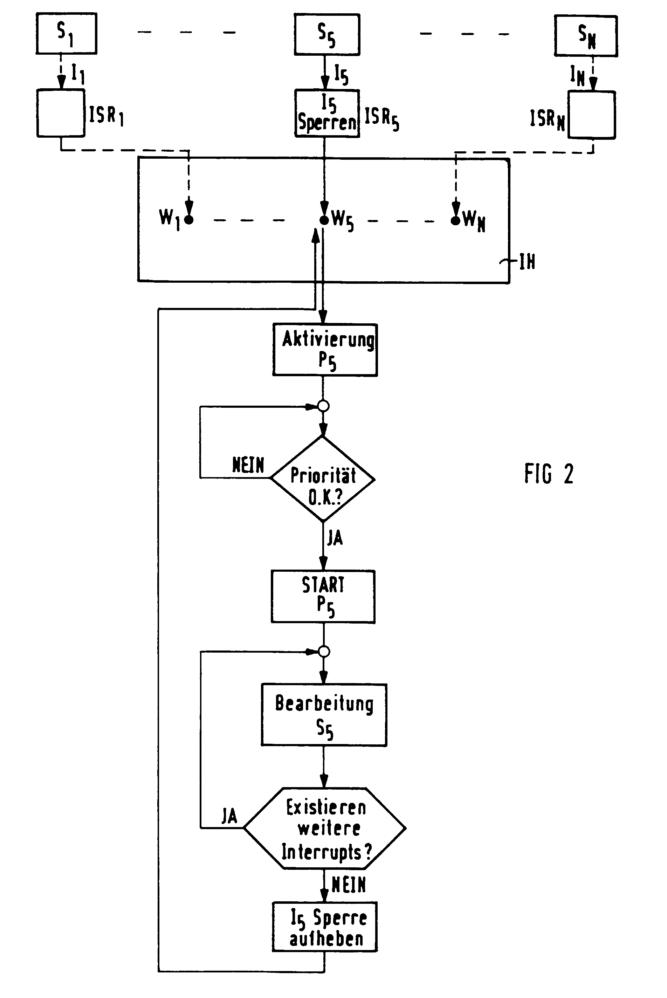

In FIG 2 wird davon ausgegangen, daß die Systemaufgabe S5 zur Bearbeitung ansteht. In diesem Fall wird ein Interrupt I5 über eine dem Interrupt I5 zugeordnete Interrupt-Serviceroutine ISR5 der Interrupt-Steuerungsroutine IH zugeführt. Die Interrupt-Serviceroutine ISR5 setzt im Wartepunkt W5 der Interrupt-Steuerungsroutine IH eine Flagge und sperrt den Interrupt I5. Damit wird dem im Wartepunkt W5 der Interrupt-Steuerungsroutine IH sich in Wartestellung befindlichen Prozesses P5 signalisiert, daß eine Bearbeitungsanforderung von der Systemaufgabe S5 besteht. Der Prozeß P5 wird mit dem Setzen der Flagge aktiviert. Im folgenden wird vom Betriebssystem BS untersucht, ob der Prozeß P5 aufgrund der zugewiesenen Prioritätsstufe ablaufberechtigt ist. Sind die ablaufenden, mit einer höheren Prioritätsstufe versehenen Prozesse beendet und zu den jeweiligen, zugeordneten Wartepunkten W1...Wn zurückgekehrt, wird der Prozeß P5 vom Betriebssystem BS gestartet.

Nach Bearbeitung der Systemaufgabe S5 wird vom Prozeß P5 geprüft, ob von der Systemaufgabe S5 weitere Interrupt-Anforderungen anliegen. Aufgrund des Sperrens sind diese nicht bis zur Interrupt-Steuerungsroutine IH vorgedrungen und befinden sich in einem Interrupt-Statusregister. Liegen dort weiter Interrupt-Anforderungen vor, so wird die Systemaufgabe S5 erneut vom Prozeß P5 bearbeitet. Sind keine Interrupt-Anforderungen vorhanden, so wird die Sperre des Interrupts I5 wieder aufgehoben und der Prozeß P5 wird in den jeweiligen zugeordneten Wartepunkt W5 gesteuert.

## Patentansprüche

1. Verfahren zur Unterbrechungssteuerung von Prozessen in Kommunikationssystemen, wobei
Systemaufgaben (S1...Sn) von ihnen zugeordneten Prozessen (P1...Pn) in einer unterbrechungsgesteuerten Betriebsart bearbeitet werden, bei der von wenigstens einer der Systemaufgaben (S1...Sn) im Sinne eines Bearbeitungswunsches wenigstens ein Interrupt (I1...In) abgesetzt und über wenigstens eine diesem zugeordnete Interrupt-Serviceroutine (ISR1...ISRn) eine Flagge in wenigstens einem Wartepunkt (W1...Wn) einer Interrupt-Steuerungsroutine (IH) gesetzt wird, wodurch der in dem jeweiligen Wartepunkt (W1...Wn) ruhende, zugeordnete Prozeß (P1...Pn) aktiviert und zum Zwecke der Bearbeitung einer der Systemaufgaben (S1...Sn) zum Ablauf gebracht und nach Erledigung der Bearbeitung wieder am Wartepunkt (W1...Wn) in Wartestellung gesteuert wird,
**dadurch gekennzeichnet,**
daß nach dem Absetzen eines ersten Interrupts (Ix) durch eine zur Bearbeitung anstehende Systemaufgabe (Sx) der derselben zugeordnete Prozeß (Px) in eine zyklisch abfragegesteuerte Betriebsart übergeführt wird, bei der nach Bearbeitung durch den zugeordneten Prozeß (Px) die jeweilige Systemaufgabe (Sx) auf weitere Interrupt-Anforderungen hin untersucht wird, und daß die Systemaufgabe (Sx) solange vom zugeordneten Prozeß (Px) bearbeitet wird, bis keine, den gleichen Prozeß (Px) anfordernde Interrupt-Anforderungen mehr vorliegen.

2. Verfahren nach Anspruch 1,
**dadurch gekennzeichnet,**
daß vor der Bearbeitung der jeweiligen Systemaufgabe (Sx) vom Prozeß (Px) der erste Interrupt (Ix) gesperrt wird.

3. Verfahren nach Anspruch 1, 2,
**dadurch gekennzeichnet,**
daß, falls keine weiteren Interrupt-Anforderungen mehr vorliegen, die Sperre des ersten Interrupts (Ix) aufgehoben und der Prozeß (Px) in seinen Wartepunkt (W1...Wn) in Wartestellung gesteuert wird.

4. Verfahren nach einem der vorhergehenden Ansprüche,
**dadurch gekennzeichnet,**
daß jedem Prozeß (P1...Pn) eine definierte Prioritätsstufe zugeordnet wird, die die Reihenfolge im Ablauf der Prozesse (P1...Pn) untereinander bestimmt.

## Claims

1. Method for interrupt control of processes in communications systems, in which case system tasks (S1...Sn) of processes (P1...Pn) assigned to them are processed in an interrupt-controlled operating mode, in which at least one interrupt (I1 ..,ln) is removed by at least one of the system tasks (S1...Sn) in the sense of a processing request, and a flag is set at at least one waiting point (W1...Wn) in an interrupt control routine (IH) via at least one interrupt service routine (ISR1...ISRn) which is assigned to it, as a result of which the associated process (P1...Pn) which is located in the respective waiting point (W1...Wn) is activated and is caused to run in order to process one of the system tasks (S1...Sn) and, after completion of the processing, jumps back to the waiting position at the waiting point (W1...Wn), characterized in that, after a system task (Sx) which is awaiting processing has removed a first interrupt (Ix), the process (Px) assigned to the same is changed to a cyclically polling-controlled operating mode in which, after processing by the associated process (Px), the respective system task (Sx) is investigated for further interrupt requests, and in that the system task (Sx) is processed by the associated process (Px) until there are no more interrupt requests requesting the same process (Px).

2. Method according to Claim 1, characterized in that the first interrupt (Ix) is inhibited by the process (Px) before the processing of the respective system task (Sx).

3. Method according to Claim 1 or 2, characterized in that, if there are no more interrupt requests, the inhibiting of the first interrupt (Ix) is cancelled, and the process (Px) jumps to its waiting point (W1...Wn) in the waiting position.

4. Method according to one of the preceding claims, characterized in that each process (P1...Pn) is assigned a defined priority level which defines the respective sequence for running the processes (P1...Pn).

## Revendications

1. Procédé pour la commande par interruptions de processus dans des systèmes de communication, dans lequel
des tâches (S1...Sn) du système sont traitées par des processus (P1...Pn) qui leur correspondent dans un mode de fonctionnement commandé par interruptions, dans lequel au moins un lnterrupt (I1...In) est lancé par au moins une des tâches (S1...Sn) du système dans le sens d'un souhait de traitement et, par l'intermédiaire d'au moins une routine de service d'lnterrupt (ISR1...ISRn) associée à cet lnterrupt, un drapeau est mis dans au moins un point d'attente (W1...Wn) d'un routine de commande par lnterrupts (IH), de sorte que le processus associé (P1...Pn) qui repose au point d'attente (W1...Wn) actuel est activé et mis en déroulement pour le traitement d'une des tâches (S1...Sn) du système, et après le déroulement du traitement, est de nouveau commandé en position d'attente au point d'attente (W1...Wn),
caractérisé
en ce qu'après le lancement d'un premier lnterrupt (Ix) par une tâche (Sx) du système qui se présente pour le traitement, le même processus (Px) associé à cette tâche est converti en un mode de traitement commandé cycliquement par interrogation, dans lequel, après le traitement par le processus (Px) associé, la tâche respective (Sx) du système est soumise à une recherche d'autres demandes d'lnterrupts, et en ce que la tâche (Sx) du système est traitée par le processus (Px) qui lui est associé jusqu'à ce qu'il n'y ait plus de demandes d'lnterrupts qui exigent le même processus (Px).

2. Procédé selon la revendication 1,
caractérisé
en ce que le premier lnterrupt (Ix) est bloqué par le processus (Px) avant le traitement de la tâche respective (Sx) du système.

3. Procédé selon la revendication 1, 2,
caractérisé
en ce que, dans le cas où il n'y a plus d'autres demandes d'lnterrupts, le blocage du premier lnterrupt (Ix) est supprimé et le processus (Px) est commandé en position d'attente au point d'attente (W1...Wn).

4. Procédé selon une des revendications précédentes,
caractérisé
en ce qu'à chaque processus (P1...Pn), est associé un degré de priorité défini qui détermine l'ordre de succession dans le déroulement des processus (P1...Pn) l'un par rapport à l'autre.
